Europäisches Patentamt

European Patent Office

Office européen des brevets

(19)

(11) Veröffentlichungsnummer : **0 554 211 B1**

(12) # EUROPÄISCHE PATENTSCHRIFT

(45) Veröffentlichungstag der Patentschrift :
**14.12.94 Patentblatt 94/50**

(51) Int. Cl.$^5$ : **G01L 1/24**

(21) Anmeldenummer : **93810021.1**

(22) Anmeldetag : **18.01.93**

(54) **Verfahren zur faseroptischen Kraftmessung.**

(30) Priorität : **28.01.92 DE 4202185**

(43) Veröffentlichungstag der Anmeldung :
**04.08.93 Patentblatt 93/31**

(45) Bekanntmachung des Hinweises auf die
Patenterteilung :
**14.12.94 Patentblatt 94/50**

(84) Benannte Vertragsstaaten :
**AT BE CH DE ES FR GB IT LI**

(56) Entgegenhaltungen :
**EP-A- 0 241 766**
**US-A- 4 269 511**
**ELECTRONICS LETTERS, Bd. 26, 16. August**
**1990, Stevenage, GB, Seiten 1367-1369, CHEN**
**et al.: "Novel electronic scanner for cohe-**
**rence multiplexing in a quasi-distributed pres-**
**sure sensor"**

(73) Patentinhaber : **HILTI Aktiengesellschaft**
**FL-9494 Schaan (LI)**

(72) Erfinder : **Dändliker, René, Prof.**
**Institut pour la Microtechnique de l'Université**
**CH-2000 Neuchâtel (CH)**
Erfinder : **Odoni, Walter, Dr.**
**Im Fetzer 45B**
**FL-9494 Schaan (LI)**
Erfinder : **Schweizer, Edwin**
**Gribstrasse 13**
**CH-9475 Sevelen (CH)**
Erfinder : **Schad, Hanspeter**
**Wiesenstrasse 5**
**CH-9472 Grabs (CH)**

(74) Vertreter : **Wildi, Roland**
**Hilti Aktiengesellschaft**
**Patentabteilung**
**FL-9494 Schaan (LI)**

**Beschreibung**

Die Erfindung betrifft Verfahren zur faseroptischen Kraftmessung, die auf der spannungsinduzierten Doppelbrechungsänderung eines Monomode-Lichtwellenleiters beruhen. Dabei ist der Lichtwellenleiter einmal zumindest über einen Teilbereich seiner Länge in einer zu einer Vorspannkraft senkrechten Ebene zwischen die Vorspannkraft über ihre Fläche verteilende Scheiben eingebettet, bei dem zum Erzielen eindeutiger Meßergebnisse, d.h. zur Absolutmessung, polarisiertes, nicht-kohärentes Licht in ein Ende des Lichtwellenleiters eingestrahlt und der durch die Krafteinwirkung auf den Lichtwellenleiter und die daraus folgende Doppelbrechungsänderung verursachte Phasenunterschied der beiden linearen Moden der am anderen Ende des Lichtwellenleiters austretenden Lichtwellen erfaßt oder kompensiert wird, und bei dem gegebenenfalls das zur Kompensation erforderliche Steuersignal als Maß für die Kraft ausgewertet wird.

Ausgangspunkt für die Erfindung ist das in der älteren Patentanmeldung P 40 37 077.1 beschriebene Verfahren zur faseroptischen Kraftmessung (EP-A2-487 450, veröffentlicht 27,5,92).

Bekanntlich läßt sich in einem faseroptischen Lichtwellenleiter (LWL) durch ein mechanisches Spannungsfeld quer zur Achse des LWL eine einachsige (uniaxiale) Doppelbrechung induzieren, die durch zwei Brechungsindizes charakterisiert ist. Damit wird die Ausbreitungsgeschwindigkeit der Lichtwelle von der Polarisationsrichtung abhängig. Für die Richtung parallel zur Spannungsachse (optische Achse) gilt der außerordentliche Brechungsindex, senkrecht dazu der ordentliche. Die Differenz der Brechungsindizes, oft als relative Doppelbrechung bezeichnet, ist nun ein Maß für die anliegende mechanische Spannung. Linear polarisiertes Licht wird in seiner Schwingungsrichtung vektoriell in diese beiden ausgezeichneten, orthogonalen Richtungen zerlegt und breitet sich mit unterschiedlichen Geschwindigkeiten aus. Nach Durchlaufen der doppelbrechenden Schicht können mit Hilfe eines Polarisators die Teilwellen, insbesondere die beiden linearen Moden zur Interferenz gebracht werden. Für das polarisierte Licht einer Weißlichtquelle, zum Beispiel einer Halogenlampe oder einer breitbandigen lichtemittierenden Diode (LED), gilt prinzipiell dasselbe, jedoch mit der bekannten Einschränkung, daß Interferenz (Amplitudenüberlagerung) nur solange auftritt, als die Phasenverschiebung die Kohärenzlänge der Lichtwelle nicht wesentlich übersteigt. In diesem Fall addieren sich die Intensitäten zu einer mittleren Intensität, die gegen die Änderung der Doppelbrechung unempfindlich ist. Bei einer kontinuierlichen Verschiebung der Phase, wie sie in einem Interferometer möglich ist, erhält man Interferenzstreifen, die mit einer sog. Kohärenzfunktion amplitudenmoduliert sind (Weißlichtinterferenz).

In der genannten älteren Patentanmeldung werden Methoden diskutiert, die es erlauben, diesen Phasenunterschied zu messen. Eine dieser Methoden beruht auf einem Kompensationsverfahren, das in der beigefügten Fig. 1 in einem vereinfachten Schema dargestellt ist. Eine spannungsinduzierte Doppelbrechung in einem Kraftsensor, wie er nachfolgend anhand der Figuren 2 und 3 erläutert wird, wird durch ein optisches Element, den Kompensator, aufgehoben. Die Größe des für die Kompensation erforderlichen Steuersignals ist dann ein Maß für die am Sensor wirkende mechanische Spannung. Es wird insoweit auf die in Verbindung mit den Figuren 5 und 10 der genannten älteren Patentanmeldung beschriebenen Anordnungen verwiesen.

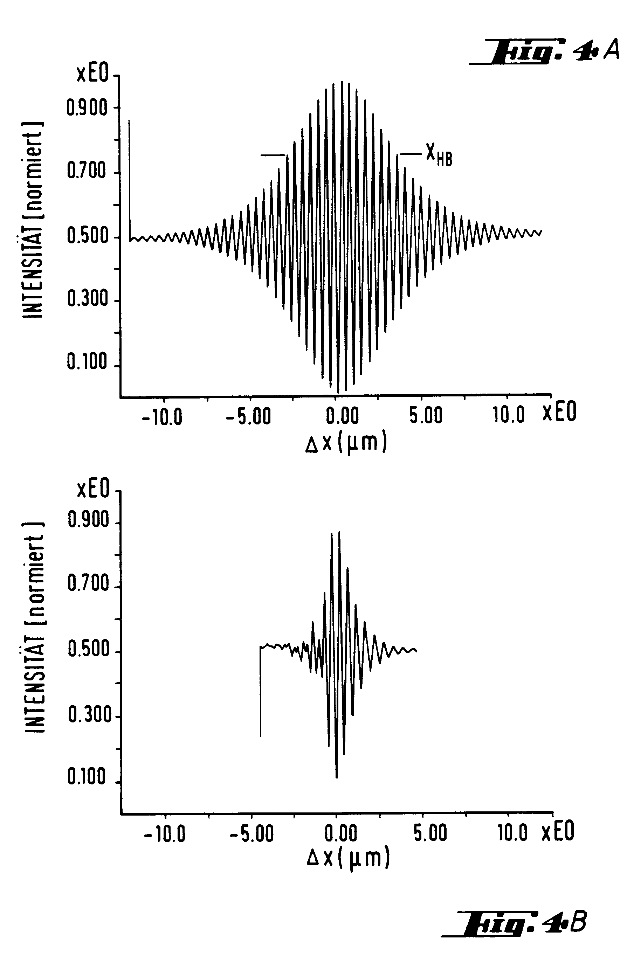

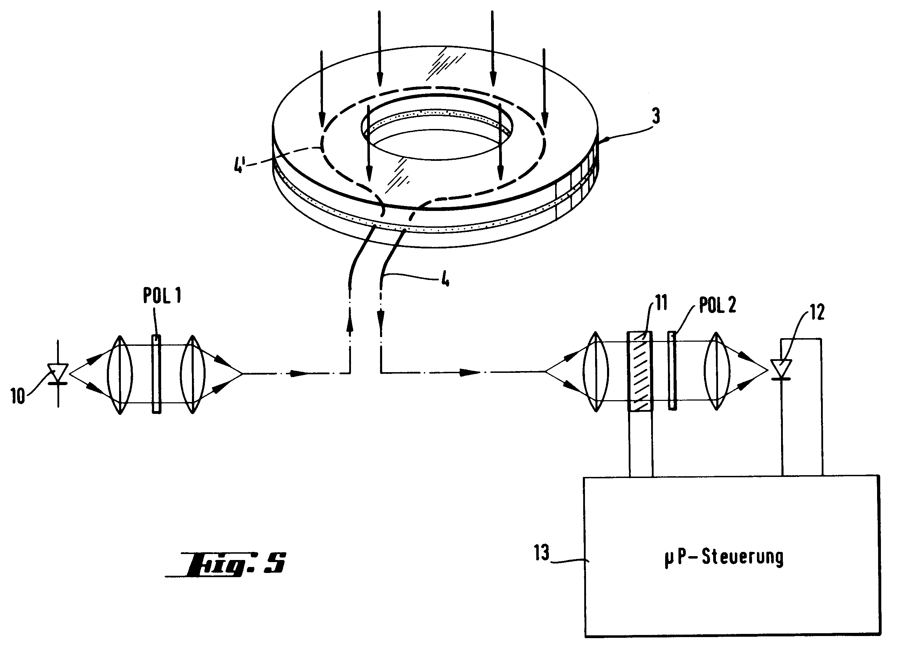

Für ein Kompensationsverfahren ist nun wesentlich, wie empfindlich die Kompensation eingestellt werden kann. Dies hängt von der verwendeten Lichtquelle, ihrer Kohärenzlänge und der Autokorrelation ab. Die Figuren 4(A) und 4(B) der beigefügten Zeichnungen zeigen die Autokorrelationsfunktionen (AKF) für eine Infrarot-LED (Fig. 4(A)) und für eine Halogenlampe (Fig 4(B)), die mit einem modifizierten Michelson-Interferometer und einer Si-Photodiode gemessen wurden, wobei der Meßaufbau im Prinzip dem anhand der Figuren 5 bzw. 10 der genannten älteren Patentanmeldung entsprach. Auffallend sind die sog. Interferenzstreifen, deren Periode im wesentlichen durch die Lichtwellenlänge und die spektrale Empfindlichkeit des verwendeten Detektors gegeben ist. Besitzt die Lichtquelle ein gaußförmiges Spektrum, so weist die AKF eine gaußförmige Hüllkurve auf, und die Kohärenzlänge ist dann ungefähr durch die Halbwertsbreite $X_{HB}$ der AKF gegeben. Der Zusammenhang mit dem Spektrum ist durch eine inverse Fouriertransformation gegeben (Theorem nach Wiener-Kintchine). Das Spektrum der LED ist in sehr guter Näherung gaußförmig mit einer Kohärenzlänge von ca. 8 $\mu$m; das der Halogenlampe ist es nicht. Das Optimum der Kompensation ist am Maximum der Autokorrelation gegeben.

Gegenüber dem Gegenstand der älteren Patentanmeldung liegt der Erfindung die Aufgabe zugrunde, das bisher bekannte Verfahren zur Kompensation zu verbessern, insbesondere die Empfindlichkeit zu steigern, möglichst ohne Verwendung mechanisch zu betätigender Bauelemente. Dadurch sollen gleichzeitig Grundlagen für ein wirtschaftlich herstellbares Meßgerät geschaffen werden, mit dem sich die Kräfte, insbesondere die Vorspannung in hochbelasteten mechanischen Bauteilen zuverlässig und jederzeit produzierbar bestimmen lassen.

Diese Aufgabenstellung wurde mit der Erfindung gemäß zweier unterschiedlicher Methoden gelöst.

Bei dem einen Verfahren, bei dem der durch die Krafteinwirkung auf den Lichtwellenleiter durch Doppelbrechungsänderung verursachte Phasenunterschied der beiden linearen Moden, der am anderen Ende des

EP 0 554 211 B1

Lichtwellenleiters austretenden Lichtwellen kompensiert wird, und bei dem das zur Kompensation erforderliche Steuersignal als Maß für die Kraft ausgewertet wird, ist erfindungsgemäß vorgesehen, als Kompensatorelement eine Flüssigkristallzelle zu verwenden, deren Doppelbrechung durch das Steuersignal kontinuierlich verändert wird, wobei die sich als Abbild der Autokorrelationsfunktion (AKF) auf der Flüssigkristallzelle in Abhängigkeit vom Steuersignal darstellenden Intensitätsänderungen photoelektrisch erfaßt werden, und wobei das Auslesesignal automatisch auf das Maximum der AKF überprüft wird. Dabei wird insbesondere ein Regelprozeß zur Feststellung des zugehörigen Spannungswerts des Steuersignals ermittelt.

Eine andere erfindungsgemäße Möglichkeit im Rahmen des erfindungsgemäßen Kompensationsverfahrens besteht darin, das Maximum aus der Ermittlung einer innerhalb der Kohärenzlänge liegenden Mehrzahl von Intensitätswerten mittels eines zur sog. Schwerpunktbestimmung geeigneten Algorithmus zu bestimmen.

Nach der anderen erfindungsgemäßen Methode ist zur Bestimmung des Phasenunterschieds aufgrund einer sich ändernden Doppelbrechung im Lichtwellenleiter, verursacht durch die Krafteinwirkung, erfindungsgemäß vorgesehen, daß die Fronten der beiden mit linearen Moden austretenden Lichtquellen durch ein optisches Bauelement mit einer linear ortsabhängigen Doppelbrechung quer zur Ausbreitungsrichtung geleitet werden, wobei die sich auf der Lichtaustrittsfläche dieses optischen Bauelements abbildende Autokorrelationsfunktion (AKF) durch einen Zeilendetektor erfaßt und dessen Auslesesignalfolge zur Bestimmung des Maximums der AKF in einem Rechenprozeß ausgewertet wird.

Als ein solches optisches Bauelement mit linear ortsabhängiger Doppelbrechung kommt insbesondere ein Wollaston-Prisma, ein Rochon-Prisma, ein Quarzkeil oder ein mit schräggestellter Verspiegelung ausgestattetes Michelson-Interferometer in Frage.

Mit beiden grundsätzlichen Methoden gemäß der Erfindung läßt sich das Maximum der AKF zuverlässig bestimmen. Dabei zeichnet sich die erste Methode dadurch aus, daß eine vergleichsweise sehr einfache Optik verwendet werden kann. Das Meßverfahren läuft insgesamt relativ langsam ab, was jedoch für viele Anwendungsfälle in der Praxis ohne Bedeutung ist. Nach dem bisherigen Stand der Entwicklung ist allerdings der Meßbereich für einen wünschenswert breiten Anwendungsbereich noch zu eingeschränkt. Außerdem ist eine Temperaturregelung erforderlich.

Die Methode nach dem zweiten erfindungsgemäßen Verfahren zeichnet sich durch einen weitgehend uneingeschränkten weitgehend linearen Meßbereich aus, wenngleich zu fordern ist, daß die Lichteinkopplung mit hoher Präzision erfolgen muß. Wegen des sehr raschen Ansprechverhaltens scheint eine Echtzeitmessung als möglich, so daß sich das Verfahren nach dem derzeitigen Entwicklungsstand auch für dynamische Messungen zu eignen scheint, da sich der Kompensationswert aufgrund des weitgehend linearen Verhaltens einfach und präzise bestimmen läßt bei hoher Temperaturstabilität der Meßanordnung.

Die Erfindung und vorteilhafte Einzelheiten werden nachfolgend unter Bezug auf Ausführungsbeispiele anhand der beigefügten Zeichnungen erläutert. Es zeigen:

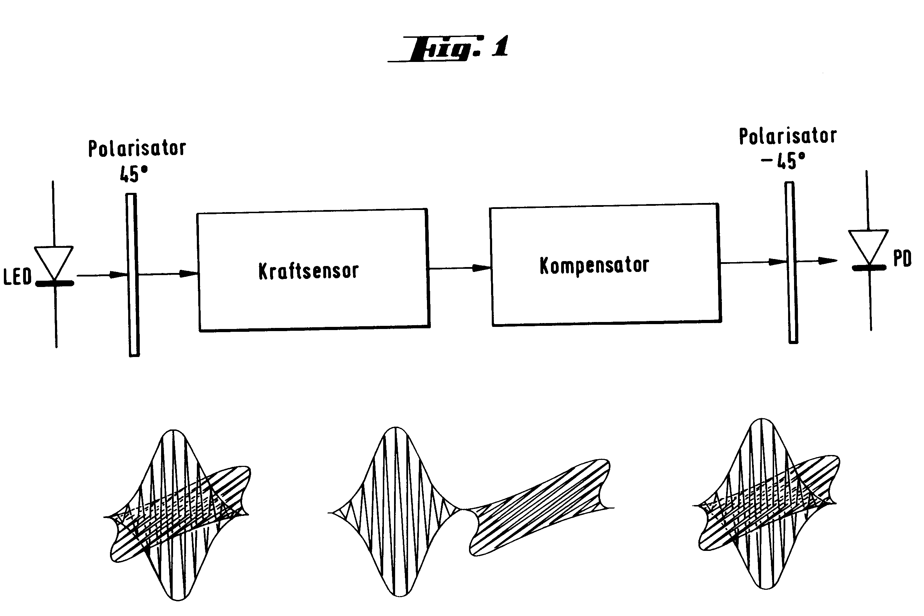

**Fig. 1** das bereits erläuterte vereinfachte Schema des Prinzips einer Kompensationsanordnung bei der faseroptischen Kraftmessung;

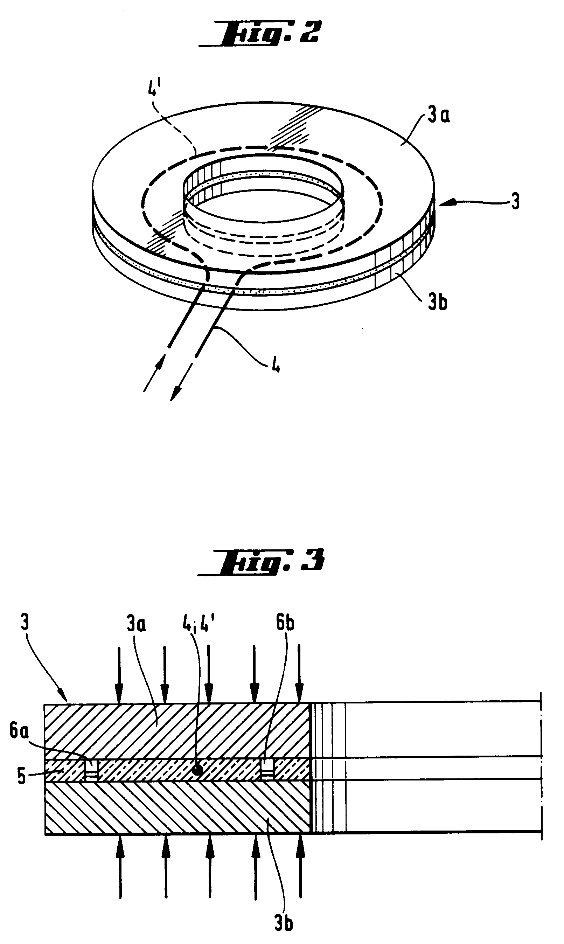

**Figs. 2 und 3** ein Ausführungsbeispiel für den Kraftsensor, ausgeführt als ein in eine kraftübertragene Scheibe eingebetteter faseroptischer Lichtwellenleiter;

**Figs. 4(A) und 4(B)** die bereits erläuterten Autokorrelationsfunktionen für eine Infrarot-LED (Fig. 4(A)) einerseits und für eine Halogenlampe (FIG. 4(B)) andererseits;

**Fig. 5** den prinzipiellen Meßaufbau bei der phaseroptischen Kraftmessung unter Verwendung einer Flüssigkristallzelle als Kompensatorelement gemäß der ersten grundsätzlichen Ausführungsvariante der Erfindung;

**Fig. 6** den Prinzipaufbau für das erfindungsgemäße Verfahren zur phaseroptischen Kraftmessung, bei dem ein optisches Bauelement mit ortsabhängiger Doppelbrechung verwendet wird, dessen Abbildungebene durch einen Zeilendetektor, beispielsweise ein CCD-Array abgefragt wird;

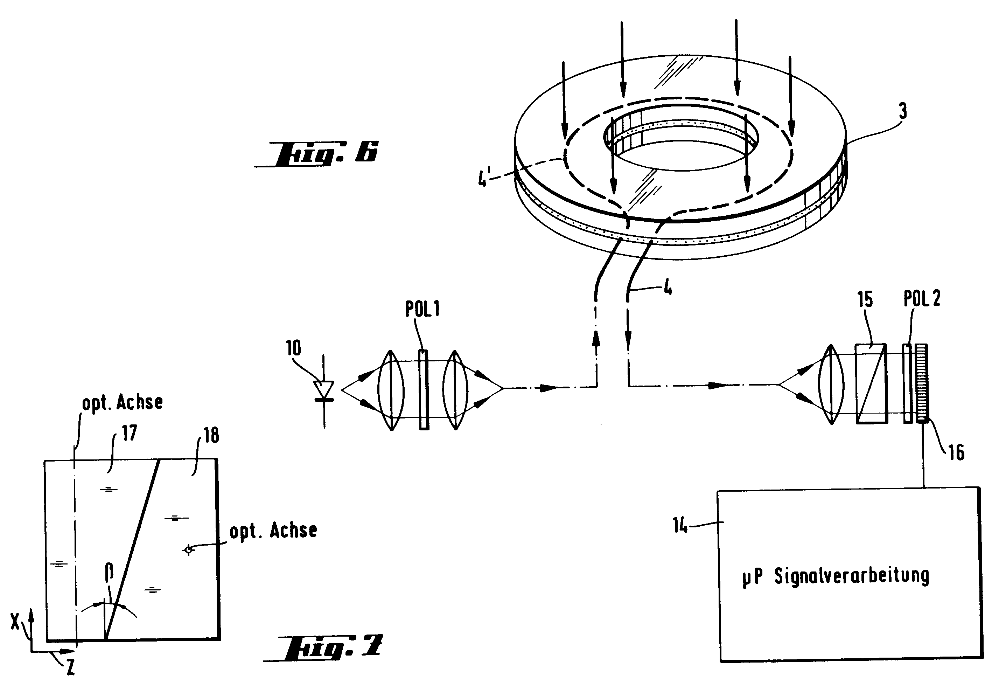

**Fig. 7** das Prinzip eines Wollaston-Prismas zur weiteren Erläuterung der zweiten grundsätzlichen Ausführungsvariante der Erfindung;

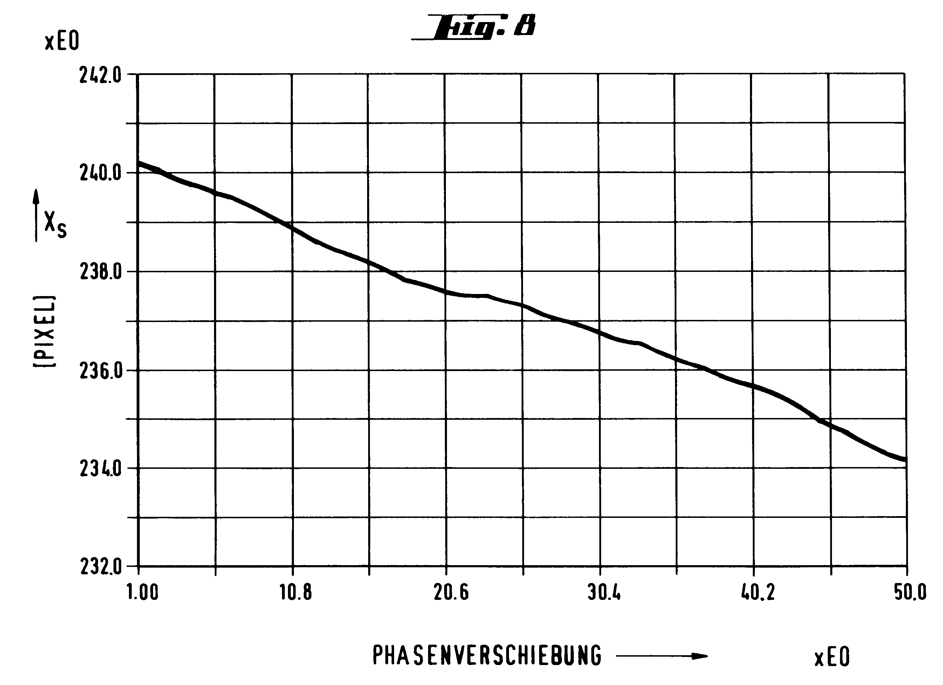

**Fig. 8** ein Meßergebnis bei der zweiten erfindungsgemäßen Verfahrensvariante unter Verwendung eines simultierten Kraftsensors und

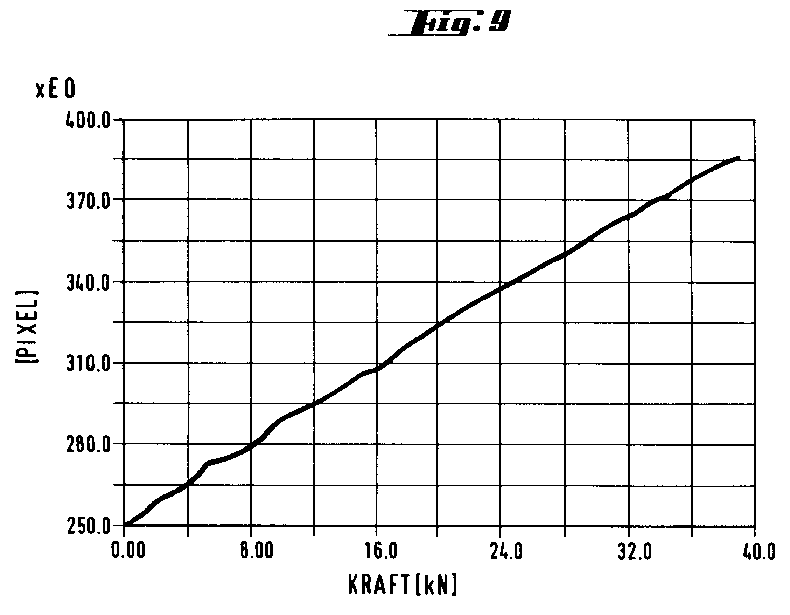

**Fig. 9** die Ergebnisse einer Meßreihe gemäß dem zweiten erfindungsgemäßen Verfahren bei Verwendung einer Sensorscheibe mit eingebettetem Lichtwellenleiter, wie beispielshaft in Fig. 3 veranschaulicht.

Um die Vorspannkraft in einem hochbelasteten Bauelement, beispielsweise in einem Schwerlastdübel nach dem erfindungsgemäßen Verfahren messen zu können, ist eine Lichtleitfaser 4, (vgl.Fig. 2 und 3), also der LWL in eine Unterlagscheibe 3 bzw. zwischen zwei Scheiben 3a, 3b über einen Teilbereich 4' ihrer Länge eingebettet. Da der LWL 4 allein die typischen Vorspannkräfte von z.b. 10-30 kN, verteilt über eine Schleifenlänge des eingespannten Teilbereichs 4' von bspw. 60 mm, nicht aufnehmen kann, ist die Unterlagscheibe 3 so modifiziert, das der LWL 4 nur den entsprechenden Flächenbruchteil aushalten muß und andererseits durch

3

eine Ummantelung 5 sowie ggfs. durch zusätzlich druckaufnehmende Abstandshalteringe 6a bzw. 6b gegen Überlastung und Korrosion geschützt ist. Für die Ummantelung 5 eignen sich vor allem bestimmte Glaslote ohne Kriech- oder Hystereseverhalten und mit einem thermischen Ausdehnungskoeffizienten, der an den der Faser des LWL 4 angepaßt ist. Für weitere Einzelheiten wird auf die Beschreibung der genannten älteren Patentanmeldung verwiesen.

Der Aufbau einer Meßanordnung nach der ersten grundsätzlichen Ausführungsvariante der Erfindung wird nachfolgend unter Bezug auf Fig. 5 kurz beschrieben.

Licht einer breitbandigen LED 10 oder einer Halogenlampe durchläuft über in der Zeichnung nur angedeutete optische Elemente einen Polaristor POL1 und wird an einem Ende in den LWL 4 eingestrahlt. Durch ein mittels senkrechter Pfeile angedeutetes mechanisches Spannungsfeld wird im Teilbereich 4′ der LWL 4, also innerhalb der Unterlagscheibe 3, eine uniaxale Doppelbrechung induziert, was zu unterschiedlichen Ausbreitungsgeschwindigkeiten der Lichtwelle in Abhängigkeit von der Polarisationsrichtung führt. Die am anderen Ende des Lichtwellenleiters in unterschiedlichen Moden austretende Lichtwelle wird wiederum über eine nur angedeutet, an sich bekannte Optik auf eine Flüssigkristallzelle 11 als Kompensatorelement geleitet, deren Doppelbrechung sich elektrisch durch eine Mikroprozeßorsteuerung 13 verändern läßt. Nach Durchlaufen eines weiteren Polarisators POL 2 wird die Autokorrelationsfunktion (AKF) in Abhängigkeit von der Ansteuerspannung an der Flüssigkristallzelle 11 als Funktion der Zeit durch eine Einzel-Photodiode 12 beobachtet. Mittels einer Signalverarbeitung, die als sog. "Tracking-Methode" bekannt ist, wird auf das Maximum der AKF geregelt. Eine andere Möglichkeit zur Ermittlung des Maximums der AKF besteht in einem Scan-Verfahren, dem ein weiter unten erläuteter Algorithmus zugrundeliegt.

Die zugehörige Spannung, die am Maximum an der Flüssigkristallzelle 11 anliegt, ist ein Maß für die zu kompensierende Doppelbrechung.

Das Grundprinzip der zweiten erfindungsgemäßen Verfahrensvariante wird nachfolgend mit Bezug auf Fig. 6 erläutert. Die aus Fig. 5 bereits bekannten und entsprechend vorhandenen Bauteile werden nicht erneut beschrieben.

Bei dieser Methode werden die Fronten der beiden Teilwellen aufgrund der durch die Doppelbrechungsänderung verursachten Phasenunterschiede durch ein optisches Bauelement 15 mit einer linear ortsabhängigen Doppelbrechung quer zur Ausbreitungsrichtung geleitet. Daraus ergibt sich die AKF als Funktion einer Ortskoordinate. Diese Ortskoordinate kann mit einem Zeilendetektor 16, bspw. einem CCD-Zeilenarray elektronisch aufgezeichnet bzw. einem Prozessor 14 zur Verarbeitung zugeführt werden. Eine derartige optische Komponente 15 kann ein Wollaston-Prisma, ein Rochon-Prisma, ein Quarzkeil oder ein modifiziertes Michelson-Interferometer mit schräggestelltem Spiegel sein.

Ein Wollaston-Prisma besteht, wie die Skizze der Fig. 7 veranschaulicht, aus zwei doppelbrechenden Keilen 17,18 - zum Beispiel aus Qarz oder Kalkspat - mit optischen Achsen, die senkrecht zur Ausbreitungsrichtung des Lichts und orthogonal zueinander stehen, zum Beispiel erster Keil 17 nach oben zweiter Keil 18 in der Zeichenebene. Wählt man ein Koordinatensystem X, Z, wie es in Fig. 7 angegeben ist, so ist die ortsabhängige Phasenverschiebung gegeben durch

$$\delta \ (x) \ = \ 2\pi/\lambda_o \ 2\Delta n \ \tan\beta \ x$$

Darin bezeichnet $\Delta n = n_e - n_o$ ($n_e$ außerordentlicher und $n_o$ ordentlicher Brechungsindex), $\beta$ den Keilwinkel der Prismen und $\lambda_0$ die Wellenlänge des Lichts in Luft.

Der Ort des Maximums der AKF ist bei bekannter oder geeichter Ortsabhängigkeit der Phasenverschiebung ein Maß für die im LWL 4 durch die mechanische Spannung vorliegende Doppelbrechung. Ist die Kohärenzlänge der Lichtquelle 10 bekannt, so kann mit der experimentell ermittelten Halbwertsbreite $X_{HB}$ der AKF eine Skalierung vorgenommen werden.

Im folgenden werden Algorithmen zur Bestimmung des Maximums der Autokorrelationsfunktion (AKF) kurz vorgestellt:

Wie oben beschrieben kann die AKF als Funktion der Zeit (z.B. mit FK) oder einer Ortskoordinate (z.B. mittels Wollaston-Prisma) gewonnen werden. Die Algorithmen zur Bestimmung des Maximums sind in beiden Fällen anwendbar. Da jeweils diskrete, in Ort oder Zeit äquidistante Werte erfaßt werden, ist der Verlauf der AKF durch den Zusammenhang

$$I_n \ = \ m \exp( \, - \, (x_n - x_s)^2/x_0^2) \cos 2\lambda/p \ (x_n - x_s)$$

beschrieben. Hierbei ist der Mittelwert (Gleichanteil) subtrahiert. $I_n$ ist der n-te Intensitätswert, m der Modulationsgrad, $x_n$ die zugehörige Ortskoordinate bzw. der n-te Zeitwert, $x_s$ der Wert des Maximums der AKF, $x_0$ die Halbwertsbreite und p die Periodenlänge (pitch) der Interferenzstreifen. Wird der sog. Pixelabstand des Zeilendetektors 16 (des CCD-Zeilenarrays) mit a bezeichnet, so lassen sich $x_n$, $x_s$ und $x_0$ auch als Bruchteile oder Vielfache von a angeben.

Eine der Methoden zur Ermittlung des Maximums der AKF ist die sog. **Schwerpunktbestimmung**. Für eine ausführliche Darstellung wird auf den IMT-Report 286, PA 03/91 verwiesen. Zunächst wird der konstante Anteil oder der Anteil, der ohne Interferenztreifen als Untergrund (z.B. Intensitätsprofil der Fernfelds des LWL 4) vorhanden ist, eliminiert. Da die Interferenzfunktion jetzt symmetrisch um Null oszilliert, versagt die lineare Schwerpunktbestimmung; man muß also die Beträge oder deren Quadrate nehmen, d.h.:

$$x_s = \sum_{n=1}^{N} I_n^2\, n / \sum_{n=1}^{N} I_n^2 \quad \text{bzw.} \quad x_s = \sum_{n=1}^{N} |I_n|\, n / \sum_{n=1}^{N} |I_{n'}|$$

Wie in dem genannten Report gezeigt, ist bei genügender Anzahl von Meßpunkten die Schwerpunktkoordinate sehr präzise bestimmt und von Rauschsignalen unbeeinflußt. Bei der praktischen Auswertung sind allerdings noch systemmatische Fehlerquellen zu beachten, die durch nichtebene Wellenfronten, durch Nichtlinearitäten des Wollaston-Prismas, durch Inhomogenitäten des Zeilendetektors 16 und durch eventuelle Fehler im Kraftsensor 3 verursacht werden können.

Prinzipiell läßt sich der Schwerpunkt mittels einer Phasenbestimmung noch präzisieren, wenn das CCD-Zeilenarray des Zeilendetektors 16 und die zu vermessenden Interferenzstreifen in einer festen Phasenbeziehung zueinander stehen. Entspricht zum Beispiel eine Streifenbreite genau 4 Pixels, so läßt sich lokal eine Phase $\varnothing_n$ definieren mit

$$I_n = \exp(\,-(x_n - x_s)^2/x_0^2)\cos(\pi/2\,(n - n_s) - \varnothing_n).$$

Mit den Hilfsgrößen $S(x_n)$ und $C(x_n)$ wird die lokale Phase aus

$$\varnothing_n = \arctan(S(x_n)/C(x_n))$$

errechnet und über alle N gemittelt. $S(x_n)$ und $C(x_n)$ sind durch

$$S(x_n) = I_{n-1} - I_{n+1} \text{ und } C(x_n) = I_n - 1/2\,(I_{n+2} + I_{n-2})$$

definiert.

Als ein weiterer Algorithmus, der die gesamte Kurvenform berücksichtigt und damit die Schwerpunktsbestimmung und Phasenmessung in sich vereint, ist ein nichtlinearer Fit nach dem kleinsten quadratischem Fehler mit der Funktion

$$I_n = \exp(\,-(x_n - x_s)^2/x_0^2)\cos 2\pi/p\,(x_n - x_s)$$

wobei mit m, $x_s$, $x_0$ und p die Fitparameter bezeichnet sind. Entsprechende wissenschaftliche Software mit einer Gauß-Newton-Fit-Routine steht zur Verfügung.

Um die praktische Brauchbarkeit des erfindungsgemäßen Verfahrens nach beiden Methoden zu demonstrieren,seien entsprechende Versuchsergebnisse kurz dargestellt.

Als Lichtquelle 10 wurden eine Diode der Firma ABB-Hafo mit der Typenbezeichnung 1A225 gewählt, mit der sich eine Leistung von einigen 100 nW in einen Monomode-LWL 4 mit einem Kern von 6 μm Durchmesser einkoppeln läßt. Die Wellenlänge liegt bei 880 nm mit einer vollen Halbwertsbreite von ca. 50 nm. Als Zeilendetektor 16 wurde der "Typ S" der Firma Reticon verwendet, der - ausgestattet mit Satelliten- und Grundplatine und 512 Detektorelementen - eine rechteckige Detektorfläche von 25 μm · x 2.5 mm aufwies. Das Wollaston-Prisma als optische Komponente 15 bestand aus Quarz und wies eine ortsabhängige Phasenverschiebung von $2\pi$ auf 0.1 mm auf. Werden die Interferenzstreifen mit dem CCD-Zeilen Array direkt im Kontakt mit dem Wollaston-Prisma aufgenommen, so ergeben sich ca. 4 Pixels pro Interferenzstreifen.

Bei einer ersten Messung wurde zur Simulation des faseroptischen Kraftsensors ein durchstimmbarer Soleil-Babinet Kompensator verwendet. Allerdings läßt sich damit nur eine geringe Phasenverschiebung von etwa einer Streifenbreite (4 Pixels) realisieren. Wie die Fig.8 erkennen läßt, ergibt sich für diesen relativen schmalen Bereich ein sehr linearer Zusammenhang.

Eine entsprechende Messung wurde an einer Sensorscheibe 3 mit eingebettetem Lichtwellenleiter 4 ebenfalls durchgeführt. Das Meßergebnis ist in Fig. 9 dargestellt.

## Patentansprüche

1. Verfahren zur faseroptischen Kraftmessung, die auf der spannungsinduzierten Doppelbrechung eines Monomode-Lichtwellenleiters (4) beruht, der zumindest über einen Teilbereich (4') seiner Länge in einer zu einer Vorspannkraft senkrechten Ebene zwischen die Vorspannkraft über ihre Fläche verteilende Scheiben (3a, 3b) eingebettet ist, bei dem zum Erzielen eindeutiger Meßergebnisse, d.h. zur Absolutmessung, polarisiertes, nicht kohärentes Licht in ein Ende des Lichtwellenleiters (4) eingestrahlt und der durch die Krafteinwirkung auf den Lichtwellenleiter (4) und die daraus folgende Doppelbrechungsänderung verursachte Phasenunterschied der beiden linearen Moden der am anderen Ende des Lichtwellenleiters (4) austretenden Lichtwellen kompensiert wird, und bei dem das zur Kompensation erforderliche Steuersignal als Maß für die Kraft ausgewertet wird, **dadurch gekennzeichnet**, daß
- als Kompensatorelement eine Flüssigkristallzelle (11) verwendet wird, deren Doppelbrechung durch das Steuersignal kontinuierlich verändert wird,
- die sich als Abbild der Autokorrelationsfunktion auf der Flüssigkristallzelle (11) in Abhängigkeit vom Steuersignal darstellenden Intensitätsänderungen photoelektrisch (12) erfaßt werden, und daß
- das Auslesesignal automatisch auf das Maximum der Autokorrelationsfunktion überprüft wird.

2. Verfahren nach Anspruch 1, **dadurch gekennzeichnet**, daß das Maximum der Autokorrelationsfunktion durch einen Regelprozeß zur Feststellung des zugehörigen Spannungswerts des Steuersignals ermittelt wird.

3. Verfahren nach Anspruch 1, **dadurch gekennzeichnet**, daß das Maximum aus der Ermittlung einer innerhalb der Kohärenzlänge liegenden Mehrzahl von Intensitätswerten mittels eines Algorithmus zur Schwerpunktbestimmung bestimmt wird.

4. Verfahren zur faseroptischen Kraftmessung, die auf der spannungsinduzierten Doppelbrechungsänderung eines Monomode-Lichtwellenleiters (4) beruht, der zumindest über einen Teilbereich (4′) seiner Länge in einer zu einer Vorspannkraft senkrechten Ebene zwischen die Vorspannkraft über ihre Fläche verteilenden Scheiben (3a, 3b) eingebettet ist, bei dem zum Erzielen eindeutiger Meßergebnisse, d.h. zur Absolutmessung, polarisiertes, nicht kohärentes Licht in ein Ende des Lichtwellenleiters (4) eingestrahlt und der durch die Krafteinwirkung auf den Lichtwellenleiter (4) und die daraus folgende Doppelbrechungsänderung verursachte Phasenunterschied der beiden linearen Moden der am anderen Ende des Lichtwellenleiters (4) austretenden Lichtwellen erfaßt wird, **dadurch gekennzeichnet**, daß
- die Fronten der beiden mit linearen Moden austretenden Lichtwellen durch ein optisches Bauelement (15) mit einer linear ortsabhängigen Doppelbrechung quer zur Ausbreitungsrichtung geleitet wird, und daß
- die sich auf der Lichtaustrittsfläche dieses optischen Bauelements (15) nach Durchlaufen eines Polarisators (POL2) abbildende Autokorrelationsfunktion durch einen Zeilendetektor ( 16) erfaßt und dessen Auslesesignalfolge zur Bestimmung des Maximums der Autokorrelationsfunktion in einem Rechenprozeß ausgewertet wird.

5. Verfahren nach Anspruch 4, **dadurch gekennzeichnet**, daß als optisches Bauelement (15) mit linear ortsabhängiger Doppelbrechung ein Wollaston-Prisma, ein Rochon-Prisma, ein Quarzkeil oder ein mit schräggestellter Verspiegelung ausgestattetes Michelson-Interferometer verwendet wird.

## Claims

1. Process for fibre-optical load measuring which is based an stress-induced double refraction of a mono-mode optical fibre (4), which is embedded at least over a portion (4′) of its length in a plane which is vertical to the pretensional load between discs (3a, 3b) which spread the pretensional load over its surface, and that for the purpose of obtaining clear measuring results, i.e. for absolute measurements, polarized incoherent light is fed into one end of the optical fibre (4), and a phase difference, as caused by the effect of the load on the optical fibre (4) and a therefrom resulting double-refraction change, of the two linear modes of the light waves exiting at the other end of the optical fibre (4) is compensated, where the control signal for compensation is evaluated as a measure of the load, **characterised in that**
- the compensator element is a liquid-crystal cell (11), the double refraction of which is continuously changed by the control signal;
- the intensity changes, which represent themselves as an image of the auto-correlation function on the liquid-crystal cell (11) in dependence of the control signal, are photo-electrically (12) detected; and that
- the read-out signal is automatically checked for a maximum of the auto-correlation function.

2. Process according to claim 1, **characterised in that** the maximum of the auto-correlation function is determined by a control process for determination of the associated stress value of the control signal.

3. Process according to claim 1, **characterised in that** the maximum from a determination of a plurality of intensity values within the coherence length is determined by means of an algorithm for determination of the centre of gravity.

4. Process for fibre-optical load measuring based on stress-induced double refraction change of a mono-mode optical fibre (4), which is embedded at least over a portion (4′) of its length in a plane which is vertical to the pretensional load between discs (3a, 3b) which spread the pretensional load over its surface, and that for the purpose of obtaining clear measuring results, i.e. for absolute measurements, polarized incoherent light is fed into one end of the optical fibre (4), and a phase difference, as caused by the effect of the load on the optical fibre (4) and resulting double refraction change, of the two linear modes of the light waves exiting at the other end of the optical fibre (4) is detected, **characterised in that**

- the fronts of the two light waves exiting with the linear modes are ducted through an optical component (15) with a linear location-dependent double refraction transversely to the spreading direction; and that
- the auto correlation function, which is imaged on the light-output surface of this optical component (15) after having passed through a polarizer (POL2), is detected by a line detector (16), the readout signal sequence of which is evaluated in a computer process for determining the maximum of the auto correlation function.

5. Process according to claim 4, **characterised in that** a Wollaston prism, a Rochon prism, a quartz wedge or a Michelson interferometer with slanted reflector is used as an optical component (15) with linear location-dependent double refraction.

## Revendications

1. Procédé de mesure d'une force utilisant une fibre optique, basé sur la biréfringence, induite par tension, d'un guide d'ondes lumineuses monomode (4) qui est inséré, au moins sur une partie (4′) de sa longueur, dans un plan perpendiculaire à une force de précontrainte, entre deux disques (3a, 3b) répartissant ladite force de précontrainte sur sa surface, dans lequel la lumière non-cohérente polarisée est envoyée, pour l'obtention de résultats de mesure univoques, c'est-à-dire pour la mesure absolue, dans une extrémité du guide d'ondes lumineuses (4), avec compensation de la différence de phases entre les deux modes linéaires des ondes lumineuses sortant à l'autre extrémité du guide d'ondes lumineuses (4) provoquée par l'action d'une force sur ledit guide d'ondes lumineuses (4) et par la variation de la biréfringence qui en résulte, et dans lequel le signal de commande nécessaire pour la compensation est utilisé comme valeur de mesure pour la force, caractérisé en ce que

- une cellule à cristal liquide (11) dont la biréfringence est modifiée en continu par le signal de commande est utilisée comme élément compensateur,
- les variations d'intensité apparaissant sur la cellule à cristal liquide (11) en tant que reproduction de la fonction d'autocorrélation en fonction du signal de commande sont détectées de manière photo-électrique (12), et que
- le signal de lecture est vérifié automatiquement pour détecter le maximum de la fonction d'autocorrélation.

2. Procédé selon la revendication 1, caractérisé en ce que le maximum de la fonction d'autocorrélation est déterminé par un processus de réglage pour la détermination de la valeur de tension associée du signal de commande.

3. Procédé selon la revendication 1, caractérisé en ce que le maximum est déterminé à partir de la détection d'une pluralité de valeurs d'intensité situées à l'intérieur de la longueur de cohérence au moyen d'un algorithme pour la détermination du centre de gravité.

4. Procédé de mesure d'une force utilisant une fibre optique, basé sur la variation de la biréfringence, induite par tension, d'un guide d'ondes lumineuses (4) qui est inséré, au moins sur une partie (4′) de sa longueur, dans un plan perpendiculaire à une force de précontrainte, entre deux disques (3a, 3b) répartissant ladite force de précontrainte sur sa surface, dans lequel la lumière non-cohérente polarisée est envoyée, pour l'obtention de résultats de mesure univoques, c'est-à-dire pour la mesure absolue, dans une extrémité du guide d'ondes lumineuses (4), avec détermination de la différence de phases entre les deux modes linéaires des ondes lumineuses sortant à l'autre extrémité du guide d'ondes lumineuses (4) provoquée par l'action d'une force sur ledit guide d'ondes lumineuses (4) et par la variation de la biréfringence qui en résulte, caractérisé en ce que

- les fronts des deux ondes lumineuses sortant en mode linéaire sont dirigés par un composant optique (15) avec une biréfringence dépendant linéairement du lieu, transversalement à la direction de propagation, et que

- la fonction d'autocorrélation reproduite sur la surface de sortie de lumière dudit composant optique (15) après le passage par un polariseur (POL2), est détectée par un détecteur de lignes (16), et que la séquence de signaux de lecture de celui-ci est interprétée pour déterminer le maximum de la fonction d'autocorrélation par un processus de calcul.

5. Procédé selon la revendication 4, caractérisé en ce que le composant optique (15) avec une biréfringence dépendant linéairement du lieu est un prisme de Wollaston, un prisme de Rochon, un coin en quartz ou un interféromètre de Michelson muni de couches réfléchissantes inclinées.

# Fig. 1

Polarisator
45°

Polarisator
−45°

LED

Kraftsensor

Kompensator

PD

EP 0 554 211 B1

# Fig. 2

# Fig. 3

Fig. 4 A

Fig. 4 B

Fig. 5

**Fig. 6**

**Fig. 7**

µP Signalverarbeitung

POL 2
POL 1

opt. Achse
opt. Achse

Fig. 8

xE0

PHASENVERSCHIEBUNG ⟶ xE0

EP 0 554 211 B1

# Fig. 9